# EUROPÄISCHE PATENTSCHRIFT

(11) **EP 0 973 044 B1**
(45) Veröffentlichungstag und Bekanntmachung des Hinweises auf die Patenterteilung: **09.08.2006**
(21) Anmeldenummer: 99112907.3
(22) Anmeldetag: 05.07.1999
(51) Int. Cl.: G01S 3/786

(54) **Verfahren zur Verfolgung bewegter Objekte anhand spezifischer Merkmale**
Method for tracking moving objects using specific characteristics
Procédé pour la poursuite d'objects mobiles utilisant des caractéristiques spécifiques

(30) Priorität: 13.07.1998 CH 149298
(43) Veröffentlichungstag der Anmeldung: 19.01.2000
(73) Patentinhaber: OERLIKON CONTRAVES AG, 8050 Zürich (CH)
(72) Erfinder: Lanini, Nicola, 8052 Zürich (CH)
(74) Vertreter: OK pat AG

(56) Entgegenhaltungen:
- DE-A- 2 938 853
- US-A- 4 719 584
- US-A- 4 796 187
- US-A- 4 849 906
- US-A- 4 937 878
- US-A- 5 289 993

## Beschreibung

Die beschriebene Erfindung beinhaltet ein Verfahren zur Erfassung und Verfolgung von Objekten innerhalb von digitalisierten Bildern aufgrund von Eigenschaften, welche diese Objekte klar von anderen in den Bildern vorhandenen Strukturen unterscheidbar macht.

Die Automatisierung von Prozessen sowie autonom arbeitende Systeme und Vorrichtungen in der Fertigungstechnik sowie in militärisch genutzten Systemen erfordert die sichere Erfassung von handzuhabenden Objekten, Hindernissen oder Zielen. Insbesondere militärische Systeme zur Luftverteidigung beinhaltende hochentwickelte Teilsysteme zur Erfassung der Struktur, Position und Bewegungsrichtung von Luftfahrzeugen, deren relevante Daten äusserst schnell verfügbar sein müssen, um jede Bedrohung sicher abzuwehren. Da solche Systeme üblicherweise mit aktiven Sensoren ausgerüstet sind, insbesondere auch Rundsuch- und Trackingradars, sind auch Waffensysteme entwickelt worden, die solche Sensoren gezielt ausschalten können, indem diese deren Austrahlungen zur eigenen Zielerfassung verwenden. Die passive Erfassung von Zielen geschieht auf traditionelle Weise durch entsprechend ausgebildetes Personal.

Neben dem erheblichen Trainingsaufwand für solches Personal sind als weitere Nachteile die begrenzte Reaktionsgeschwindigkeit des Menschen sowie die Gefärdung des auf für den Gegner attraktiven Zielen eingesetzten Personals zu nennen.

Zur Erfassung und Verfolgung von Zielen durch deren Exktraktion aus durch Video- und Infrarotkameras gewonnenen Bilddaten sind daher bereits mehrere Verfahren bekannt. So kann ein Ziel durch den Vergleich der statistischen Häufigkeit bestimmter Grauwerte im Ausschnitt eines Videobildes mit derjenigen des gesamten Bildes zur Erfassung eines Zieles innerhalb des durch das Bild zu schiebenden Ausschnitts detektiert werden. Neben Täuschungsmöglichkeiten bei Vorhandensein von das ganze Bild durchschneidenden grauen Kanten mit einer entsprechenden Grauwertstatistik besteht der Nachteil der Notwendigkeit einer gewissen Mindestgrösse des zu erfassenden Objektes. Dieses kann deshalb nicht aus nur wenigen Pixeln des gesamten Bildes bestehen, womit der Erfassungsbereich einer Videokamera sich weiter von demjenigen eines Rundsuchradars entfemt.

Auch die Erhöhung der Pixelzahl durch Verwendung von Spezialkameras tritt an eine Grenze, die durch die Rechengeschwindigkeit der verwendeten Prozessoren gesetzt ist. So fanden die ersten derartigen Verfahren vor allem in der verwendeten Hardware ihren Niederschlag, die zur Erzielung einer hohen Rechengeschwindigkeit auf die spezifische Anwendung angepasst war.

Mögliche Verbesserungen des Verfahrens zogen daher einen unverhältnismässigen Aufwand durch die erforderliche Anpassung der Hardware nach sich. Nachdem erst seit kurzer Zeit Implementationen solcher Verfahren durch Erstellung lediglich der entsprechenden Software für sehr schnelle und universell einsetzbare Hardware überhaupt möglich ist, bestehen die besonderen Anforderungen für derartig implementierbare Verfahren in ihrer in Bezug auf das Volumen der erforderlichen Rechenoperationen ökonomischen Struktur.

Mit der DE-37 20 377-A1 ist ein Verfahren bekannt geworden, das zwar einige der Schritte enthält, die auch im Verfahren nach der Erfindung enthalten sind. Hierbei handelt es sich aber um ein als statisch zu bezeichnendes Verfahren, bei welchem man, nachdem man ein Bild kennt, in aufeinanderfolgenden zeitlichen Intervallen dieses gleiche Bild wiederum sucht.

Die Aufgabe der nachfolgend beschriebenen Erfindung ist es nun, daher, unter Vermeidung der beschriebenen Nachteile des Standes der Technik, die Erfassung und Verfolgung eine bewegten Luftzieles in digitalen Bildern unter minimalem Aufwand an Rechenoperationen zu gewährleisten.

Die Lösung dieser Aufgabe erfolgt durch ein Verfahren mit den Merkmalen des Anspruchs 1.

Bevorzugte Weiterbildungen des erfindungsgemässen Verfahrens sind durch die Ansprüche 2 bis 8 definiert.

Dem Stand der Technik entsprechende Verfahren bedienen sich der relativ grossflächigen Erfassung von Grauwerten und ähnlicher Merkmale, um ein Ziel aus einem Bild zu extrahieren. Das erfindungsgemässe Verfahren hingegen verwendet nur bestimmte Elemente aus der Gesamtmenge der das Ziel beinhaltenden Bildpixel. Diese werden zudem durch Transformationen der eigentlichen Zielpixelmenge und deren zusätzlicher Reduzierung auf wesentliche Pixel gewonnen. Ein hierdurch gewonnenes charakteristisches Muster des Ziels wird bei dessen Verfolgung in nachfolgenden Bildern verwendet, indem dieses mit allen Pixeln eines zu untersuchenden Bildausschnitts korreliert wird und das Korrelationsmaximum die neue Position des Ziels indiziert. Das charakteristische Muster des Ziels wird zudem durch einen Integrationsprozess ständig aktualisiert, um Änderungen des Zielprofils, etwa wenn sich ein Flugzeug im Zuge eines Kurvenflugs um seine Achsen dreht, zu berücksichtigen.

Ein wesentlicher Vorteil des erfindungsgemässen Verfahrens liegt in der Minimierung des zur Detektion eines Ziels, dessen Musterbildung sowie Verfolgung erforderlichen Rechenaufwandes der in der Minimierung der Anzahl der zu verarbeitenden Bildpunkte besteht.

Ein weiterer Vorteil ergibt sich in der hohen Dynamik des Verfahrens bezüglich der Ausdehnung der zu erfassenden Objekte. So kann ein ausgedehntes Objekt nach den beschriebenen Verfahrensschritten auf wenige signifikante Bildpixel reduziert werden. Weil aber zur Identifizierung eines Ziels nur wenige Pixel nötig sind, können auch Ziele, die lediglich wenige unverarbeitete Pixel umfassen, durch das erfindungsgemässe Verfahren erfasst und verfolgt werden. Somit besteht auch die Möglichkeit, Lenkwaffen und Drohnen ohne den Einsatz aktiver Sensoren zu erfassen und verfolgen.

Weitere Einzelheiten, Merkmale und Vorteile der Erfindung ergeben sich nicht nur aus den Ansprüchen und den diesen zu entnehmenden Merkmalen -für sich und/oder in Kombination, sondern auch aus der nachfolgenden Beschreibung bevorzugter Ausführungsbeispiele.

Es zeigen:
- **Fig. 1**: Die Darstellung eines Zielobjektes innerhalb eines Suchfensters sowie verschiedene Bearbeitungsschritte innerhalb dieses Suchfensters;
- **Fig. 2**: ein das Verfahren zur Verfolgung eines Ziels beschreibendes Blockdiagramm;

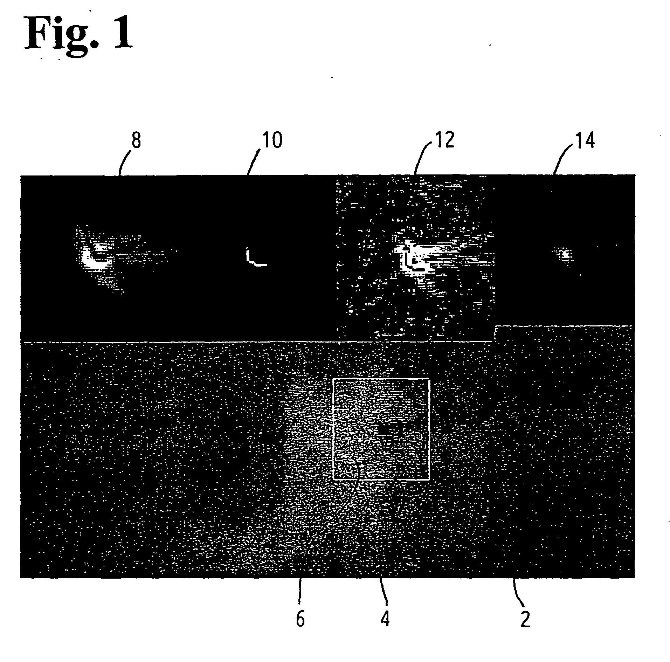

**Fig. 1** zeigt ein digitalisiert abgespeichertes Videobild **2** mit einem Suchfenster **4**, in welchem sich ein Zielobjekt **6** befindet. Die verschiedene Grauwerte aufweisenden digitalisierten Bildpixel innerhalb des Suchfensters **4** werden verschiedenen Verarbeitungsschritten unterzogen, welche verschiedene aus dem ursprünglichen Fenster abgeleitete Bildausschnitte **8**, **10**, **12** sowie **14** erzeugen.

Der in **Fig. 1** dargestellte Bildausschnitt **8** stellt den Inhalt eines Gradientenintegrators dar, in welchem Bildpixel abgespeichert sind, die aus vorangegangenen Gradientenbildern resultieren. In Gradientenbildern werden die Grauwerte der einzelnen Pixel durch die Unterschiede der Grauwerte zwischen dem entsprechenden Bildpixel sowie dem unmittelbar benachbarten Bildpixel sowohl in horizontaler als auch in vertikaler Richtung ersetzt. Da entsprechende Rauschkomponenten in den Grauwerten der ursprünglichen Bilder durch Gradientenbildung sogar hervorgehoben werden können, werden die ursprünglichen Bilder vorher einer glättenden Gaussfilterung unterzogen. Der Integrationsprozess erfolgt dadurch, dass dem zuerst in den Gradientenintegrator geladenem Gradientenbild das folgende Gradientenbild mit einem Wichtungsfaktor k pixelweise hinzugefügt wird, wobei die Bildpixel des bestehenden Bildes mit dem Wichtungsfaktor 1-k eingehen. Der Bildausschnitt **10** stellt ein aus den Daten des Bildausschnitts **8** hergestelltes Muster des zu verfolgenden Ziels dar. Die Ableitung des Musters aus dem im Bildausschnitt **8** dargestellten Inhalt des Gradientenintegrators erfolgt durch Bestimmung der Pixel des Bildausschnitts **8**, die lokale Extrema repräsentieren. Alle Pixel, die weder einen lokalen maximalen oder minimalen Wert aufweisen, werden mit dem Wert 0 überschrieben. Dieses Bild wird anschliessend durch pixelweise Multiplikation mit den Daten eines aktuellen geglätteten Gradientenbildes korreliert, wobei sich durch gegenseitiges Verschieben der Pixel beider Bilder sowohl lokale als auch ein absolutes Maximum des Korrelationsprozesses ergeben.

Im Bildausschnitt **12** ist das Gradientenbild des aktuellen Bildes **18** mit überlagertem Muster dargestellt. Die örtliche Beziehung zwischen Gradientenbild und Muster ist durch das Korrelationsmaximum dargestelllt. Bildausschnitt **14** visualisiert den geometrischen Verlauf der für den aktuellen Bild und Muster gültigen Korrelationsverlauf und stellt ein im Vergleich zu Bildausschnitt **12** zwar eindeutigeres, aber mit unverhältnismässig höherem Rechenaufwand erzieltes Ergebnis mittels Hough-Transformation dar. Das dem Bildausschnitt **12** zugrundeliegende aktuelle Gradientenbild wird nach der Korrektur des im Bildausschnitt **12** erkennbaren Lagefehlers des zu verfolgenden Ziels mit dem Wichtungsfaktor k in den Gradientenintegrator zur Aktualisierung der in dem Bildausschnitt **8** dargestellten Daten eingebracht, aus welchen anschliessend die aktualisierten Daten des im Bildausschnitt **10** dargestellten Musters berechnet werden, die anschliessend mit den Daten eines nachfolgenden Gradientenbildes korreliert werden.

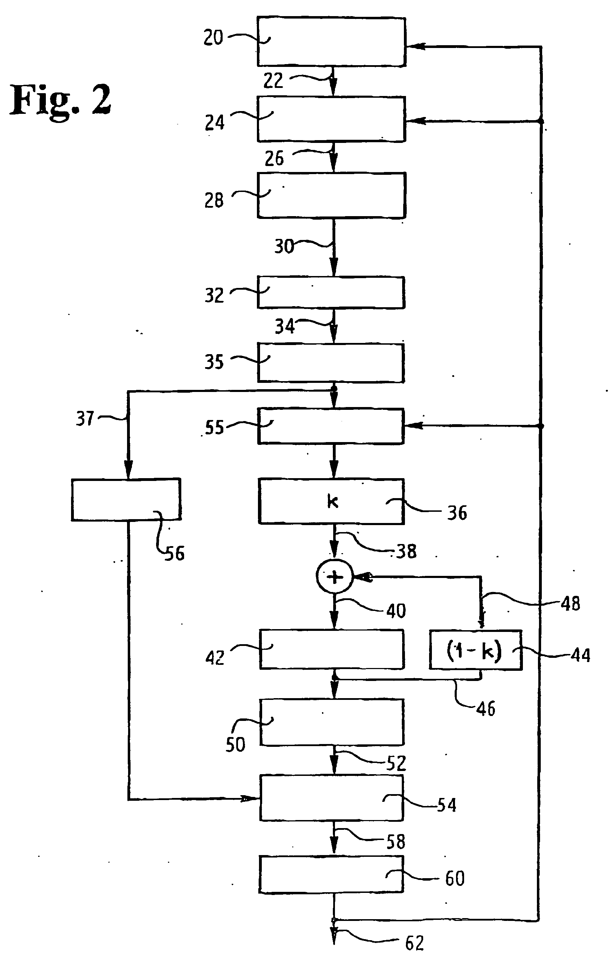

**Fig. 2** verdeutlicht das anhand der entsprechenden Bildausschnitte beschriebene Verfahren mittels eines Blockschaltbildes. Eine Videokamera **20**, welche auch durch eine Infrarotkamera oder sonstige hierzu taugliche bildgebende Sensoren ersetzt sein kann, erzeugt eine zeitlich regelmässige Folge von Videobildern **22**, aus welchen durch Zuweisung eines übergeordneten Systems oder mittels bereits durch das beschriebene Verfahren ermittelten Daten durch einen entsprechenden Prozess **24** ein Bildausschnitt **26** extrahiert wird.
Der Bildausschnitt **26** ist ein Grauwertbild, welches mittels eines den Krümmungsfluss beurteilt und per Krümmungsflussfilter verfahren (Mean Curvature Flow Prozess **28**) von zu feinen Strukturen befreit wird. Der entsprechend verarbeitete Bildausschnitt **30** wird anschliessend mittels Faltung mit einer ent-sprechend gewichteten Matrix einer gaussförmigen Tiefpassfitterung **32** unterzogen, um sowohl auf dem Bildausschnitt durch Krümmungsflussfilter bearbeitung (Mean Curvature Flow-Bearbeitung) entstandene sehr kleine Strukturen als auch Rauschkomponenten zu eliminieren. Dieser Prozess wird aus Aufwandsgründen vorzugsweise nur einmal je zu Beginn und zur Initialisierung des Vierfahrens durchgeführt.

Ein hieraus resultierender Bildausschnitt **34** dient dann als Eingangsgrösse in einem als Gradlentenbildung **35** bezeichneten Verfahrensschritt. Hierbei werden die Unterschiede der Grauwerte der benachbarten Bildpixel im Vergleich zum betreffenden Bildpixel herangezogen, in welchem statt des absoluten Grauwertes die Änderung des Grauwertes bei Übergang zu benachbarten Bildpixein gespeichert wird. In einem besonders angepassten erfindungsgemässen Verfahren werden alle Bildpixel, welche sich ausserhalb einer definierten näheren Umgebung des Zielobjekts befinden, auf den Wert 0 gesetzt

Das hieraus resultierende Gradientenbild **37** wird anhand von den aus dem vorausgegangenen Korrelationsprozess gewonnenen Zielablagedaten **62** einer Verschiebung **55** unterzogen und in einem als Wichtung **36** bezeichneten Verfahrensschritt mit einem Faktor k pixelweise multipliziert, um anschliessend pixelweise mit einem aus einem Integrator 42 rückgeführtem, in einer Wichtung **44** mit einem Faktor 1-k pixelweise multiplizierten Integratorbild **48** pixelweise addiert zu werden, wobei ein hieraus entstehendes Gradientenbild **40** als aktualisiertes Gradientenbild in den Gradienteintegrator **42** geladen wird.
Eine weitere Aufgabe, die mit Hilfe der soganannten horizontalen oder vertikalen Kantenunterdrückung ist in Praxis die Horizontunterdrückung.
Das aktuelle Integratorbild **46** wird in einem als Nicht-Maxima-Unterdrückung (Non Maximum Suppression 50) bezeichneten Verfahrensschritt von allen Pixeln befreit, welche in ihrer Umgebung kein lokales Minimum oder Maximum darstellen.

In besonderen Zwecken angepassten erfindungsgemässen Verfahren werden zusätzlich alle Pixel, welche das im Bild vorhandene Maximum des Wertes eines Pixels um einen bestimmten zweckmässigen Faktor unterschreiten, mit dem Wert 0 überschrieben.

Weiterhin werden in speziellen Ausführungsformen nur einander benachbarte, linienbildende Pixel mit einem Wert ungleich 0 berücksichtigt, welche die maximale Länge der in dem Bildausschnitt befindlichen Linien um einem bestimmten, zweckmässigen Faktor nicht unterschreiten. Hierdurch bleiben in einem als Muster **52** eines Ziels zu bezeichnendem Bildausschnitt verhätltnismässig wenige, die Kanten eines Gradientenbildes des Ziels bedeckende Bildpixel erhalten, alle weiteren Pixel werden mit dem Wert 0 belegt. Die Verfolgung des Ziels geschieht in einem als Korrelation **54** bezeichnetem Verfahrensschritt. Hierbei wird ein Muster **52** mit einem Gradientenbild **37** pixelweise unter Berücksichtigung der Vorzeichen der einzelnen Pixel multipliziert, wobei das verwendete Gradientenbild **37** noch nicht auf den Inhalt des Gradientenintegrators **42** eingewirkt hat und in mehreren Verschiebungsschritten **56** gegenüber dem Muster **52** seitlich verschoben wird. Ein hieraus gewonnenes zweidimensionales Korrelationssignal **58** besteht in seinen Pixelwerten aus der Summe der Produkte zwischen den Pixelwerten des entsprechend verschobenen Gradientenbildes **37** und des Musters **52** und wird im Verfahrensschritt der Maximumssuche **60** nach einem absolutem Maximum abgesucht, dessen Koordinaten innerhalb des Bildausschnittes Zielablagedaten **62** ergeben. Diese werden an nachgeordnete Systeme weitergereicht und dienen zur korrigierenden Verschiebung 55 nachfolgender Gradientenbilder, zur mechanischen Nachführung der Videokamera **20** sowie zur Nachführung der Exktraktion des Trackingfensters 24.

Im erfindungsgemässen Verfahren werden die zusammenhängenden Änderungen der Grauwerte der Bildpixel eines Zieles verarbeitet, entsprechend besteht ein Störpotential solcher Kanten im Hintergrund eines Bildes.

Allerdings wird im allgemeinen ein bewegliches Ziel vor einem unbeweglichen Hintergrund detektiert und verfolgt. Grenzfälle ergeben sich aber bei starken horizontalen Kanten, welche der globalen Bewegungsrichtung eines Flugkörpers entsprechen sowie bei Objekten, welche sich auf die Videokamera zubewegen. Zur Reduzierung dieser Störungen werden in einer weiteren Ausführungsform des Verfahrens Werte in Gradientenbildern **37**, welche den maximalen Wert in dem aktuellen im Gradientenintegrator **42** gespeicherten Integratorbild **46** um einen festzulegenden Faktor übersteigen, mit dem Wert 0 überschrieben.

## Patentansprüche

1. Verfahren zum Verfolgen eines bewegten Luftzieles auf der Basis von zeitlich variablen spezifischen Merkmalen des Luftzieles zum Erhalten von Daten betreffend den Weg des Luflzieles, mit den Schritten
- Erfassen (20) einer Serie von aufeinanderfolgenden Bildern (22), und für mindestens einige der Bilder
- Extrahieren (24) eines Bildausschnittes (26) des Bildes (22),
- Erzeugen (35) eines Gradientenbildes (37) FÜR jeden extrahierten Bildausschnitt (26 bzw. 34),
- Verschieben (55) des Gradientenbildes (37) mit, aus einem vorausgegangenen Korretafionsprozess gewonnenen, Zlelablagedaten,
- Gewichten (36) des verschobenen Gradientenbildes (37) mit einem Faktor k, zum Erhalten eines gewichteten Gradientenbildes (38),
- Addieren (+) des mit k gewichteten Gradientenbildes (38) zu einem vorherigen Gradientenbitd (48), das von einem früher erfassten Bild abgeleitet worden ist, wobei das früher erfasste Bild in einem Gradienten-Integrator (42) gespeichert ist und vor dem Addieren (+) mit einem Faktor 1-k gewichtet worden ist, um ein resultierendes Gradientenbild (40) zu erhalten,
- Laden des resultierenden Gradientenbildes (40) in den Gradienten-Integrator (42), um ein aktualisiertes Gradientenbild (46) zu erhalten,
- Korrelieren (54) des aktualisierten Gradientenbildes (46) mit einem weiteren Gradientenbild (37), das von einem darauffolgend erfassten Bild (22) erzeugt wird und vor dem Korrelieren (54) mehreren Verschiebungsschritten unterworfen wird, um ein zweidimensionales Korrelationssignal (58) zu erhalten, und
- Durchführen einer Suche (60) nach einem Maximum des Korrelationssignals (58), zum Erhalten von Zielablagedaten entsprechend den Daten betreffend den Weg des Luftzleies.

2. Verfahren nach Anspruch 1,
**dadurch gekennzeichnet,**
**dass** der Bildausschnitt (26) mittels eines Krümmungsflussfilterverfahrens (28) (Mean Curvature Flow Process (28)) bearbeitet wird.

3. Verfahren nach Anspruch 1,
**dadurch gekennzeichnet,**
**dass** der Bildausschnitt (26, 30) einer gaussförmigen Tiefpassfilterung (32) unterzogen wird.

4. Verfahren nach Anspruch **2** oder **3**,
**dadurch gekennzeichnet,**
**dass** der Bildausschnitt (26) nur zur Initialisierung des Verfahrens mittels des Krümmungsflussfilterverfahren (28) (Mean Curvature Flow Process (28)) bearbeitet wird.

5. Verfahren nach Anspruch **1**,
**dadurch gekennzeichnet,**
**dass** ein Muster (52) des verfolgten Zieles erhalten wird durch eine Nicht-Maxima-Unterdrückung (50) (Non Maximum Suppression (50)) des Gradientenbildes des Gradientenintegrators (42).

6. Verfahren nach Anspruch 5,
**dadurch gekennzeichnet,**
**dass** Bildpixel von Mustern (52) zu Bildpixeln reduziert werden, die einen Mindestwert haben, wobei alle übrigen Bildpixel mit dem Wert 0 überschrieben werden.

7. Verfahren nach Anspruch 5.
**dadurch gekennzeichnet,**
- **dass** Bildpixel von Mustern (52) auf ihren Zusammenhang in Linien untersucht werden, und
- **dass** alle Bildpixel, welche einen von 0 ungleichen Wert aufweisen und nicht in einer Linie mit einer Mindestlänge zusammenhängen, mit dem Wert 0 überschrieben werden.

8. Verfahren nach Anspruch 1,
**dadurch gekennzeichnet,**
**dass** Werte in Gradientenbildern (37), welche den maximalen Wert in dem im Gradienten-Integrator (42) gespeicherten Integratorbild (46) um einen bestimmbaren Faktor überschreiten, mit dem Wert 0 überschrieben werden.

## Claims

1. A method for tracking a moving air target on the basis of time-variable specific features of the air target for obtaining data concerning the path of the air target, with the steps
- recording (20) a series of subsequent images (22), and for at least some of the images
- extraction (24) of an image section (26) of the image (22),
- generation (35) of a gradient image (37) for each extracted image section (26 or 34),
- shifting (55) of the gradient image (37) by means of target course data, obtained from a previous correlation process,
- weighting (36) of the shifted gradient image (37) by a factor k, for obtaining a weighted gradient image (38),
- addition (+) of the gradient image (38) weighted with k to a previous gradient image (48), which was derived from an earlier recorded image, whereby the earlier recorded image is stored in a gradient integrator (42) and has been weighted with a factor k+1 prior to the addition, in order to obtain a resulting gradient image (40),
- loading the resulting gradient image (40) into the gradient integrator (42), in order to obtain an actualized gradient image (46),
- correlation (54) of the actualized gradient image (46) with a further gradient image (37) that is generated from a subsequently recorded image (22) and is subjected to several shifting steps prior to the correlation (54), in order to obtain a two-dimensional correlation signal (58), and
- performing a search (60) for a maximum of the correlation signal (58) for obtaining target course data corresponding to the data concerning the path of the air target.

2. The method according to claim 1,
**characterized in that**,
the image section (26) is processed by a Mean Curvature Flow Process (28) (Krümmungsflussfilterverfahren (28)).

3. The method according to claim 1,
**characterized in that**
the image section (26, 30) or is subjected to a Gauss-like low bandpass filtering (32).

4. The method according to claim 2 or 3,
**characterized in that**
the image section (26) is treated by the mean curvature process (28) (Krümmungsflussfilterverfahren (28)) only for initializing the method.

5. The method according to claim 1,
**characterized in that**
a pattern (52) of the tracked target is obtained by a non-maximum suppression (50) (Nicht-Maxima-Unterdrückung (50)) of the gradient image of the gradient integrator (42).

6. The method according to claim 5,
**characterized in that**
the image pixels of patterns (52) are reduced to image pixels having a minimum value, whereby all remaining image pixels are written over with the value zero.

7. The method according to claim 5,
**characterized in that**
- image pixels of patterns (52) are searched for their connection in lines, and
- all image pixels having a value which is not equal to zero and which are not connected in a line of a minimum length, are written over with the value zero.

8. The method according to claim 1,
**characterized in that**
the values in gradient images (37), which exceed the maximum value in the gradient image (46) stored in the gradient integrator (42) by a determinable value, are written over with the value zero.

## Revendications

1. Procédé de poursuite d'une cible aérienne mobile, se fondant sur des caractéristiques spécifiques de la cible aérienne, variables dans le temps, et destiné à recueillir des données concernant la trajectoire de la cible aérienne, comprenant les étapes suivantes :
- saisie (20) d'une série d'images successives (22), et, pour au moins quelques-unes de ces images
- extraction (24) d'un segment d'image (26) de l'image (22),
- création (35) d'une image-gradient (37) pour chaque segment d'image extrait (26 ou 34)
- décalage (55) de l'image-gradient (37) à l'aide de données stockées, sur la cible, obtenues par un procédé préalable de corrélation,
- pondération (36) de,l'image-gradient décalée (37) par un facteur k, afin d'obtenir une image-gradient pondérée (38),
- addition (+) de l'image-gradient (38), pondérée par le facteur k, à une image-gradient précédente (48) ayant été dérivée d'une image saisie précédemment, l'image saisie précédemment étant mémorisée dans un intégrateur de gradients (42) et pondérée par un facteur 1-k avant l'addition (+), afin d'obtenir une image-gradient résultante (40),
- chargement de l'image-gradient résultante (40) dans l'intégrateur de gradients (42), afin d'obtenir une image-gradient actualisée (46),
- corrélation (54) de l'image-gradient actualisée (46) avec une autre image-gradient (37), qui est créée par une image (22) saisie ultérieurement et qui subit plusieurs étapes de décalage avant la corrélation (54), afin d'obtenir un signal de corrélation bidimensionnel (58), et
- exécution d'une recherche (60) d'un maximum du signal de corrélation (58), afin d'obtenir des données stockées, sur la cible, correspondant aux données concernant la trajectoire de la cible aérienne.

2. Procédé conforme à la revendication 1,
**caractérisé en ce que**
le segment d'image (26) est traité par un procédé de flot par courbure moyenne (28) (Mean Curvature Flow Process (28))

3. Procédé conforme à la revendication 1
**caractérisé en ce que**
le segment d'image (26, 30) est soumis à un filtrage passe-bas de type gaussien (32).

4. Procédé conforme à la revendication 2 ou 3,
**caractérisé en ce que**
le segment d'image (26) est uniquement traité afin d'initialiser le processus au moyen d'un procédé de flot par courbure moyenne (28) (Mean Curvature Flow Process (28)).

5. Procédé conforme à la revendication 1
**caractérisé en ce que**
une image échantillonnée (52) de la cible poursuivie est obtenue par une suppression des non maxima (50) (Non Maximum Suppression (50)) de l'image-gradient de l'intégrateur des gradients (42).

6. Procédé conforme à la revendication 5
**caractérisé en ce que**
des pixels des images échantillonnées (52) sont réduits à des pixels avec une valeur minimale, tous les autres pixels étant écrasés par la valeur 0.

7. Procédé conforme à la revendication 5
**caractérisé en ce que**
- on examine par lignes la cohérence des pixels des images échantillonnées (52) et
- tous les pixels qui ont une valeur différente de 0 et qui n'ont pas de cohérence dans une ligne avec une longueur minimale, sont écrasés par la valeur 0.

8. Procédé conforme à la revendication 1
**caractérisé en ce que**
des valeurs, dans des images-gradients (37) qui dépassent d'un facteur déterminable la valeur maximale, dans l'image de l'intégrateur (46) mémorisée dans l'intégrateur des gradients (42), sont écrasées par la valeur 0.
